# EUROPEAN PATENT APPLICATION

(11) **EP 3 509 313 A1**
(43) Date of publication of application: **10.07.2019**
(21) Application number: 18164385.9
(22) Date of filing: 27.03.2018
(51) Int. Cl.: H04N 21/442, H04N 21/422, H04N 21/433

(54) **METHOD AND SYSTEM FOR SEAMLESS STREAMING OF MULTIMEDIA CONTENT FOR A USER ACROSS ELECTRONIC DEVICES**

(30) Priority: 08.01.2018 IN 201841000797
(71) Applicant: Wipro Limited, 560 035 Karnataka (IN)
(72) Inventor: MAMMOOTTIL, Ajin Alias, 682021 Kochi (IN); PAUL, Abbin, 686693 Nellimattom (IN); GOPALAKRISHNAN, Krishnanunni, 682017 Cochin (IN); AZEEZ, Abdul Salam Thayyil, 690 548 Kerala (IN)
(74) Representative: Finnegan Europe LLP

(57) **Abstract**

Disclosed subject matter relates to a multimedia managing system that performs a method of seamless streaming of multimedia content for a user across plurality of electronic devices. The multimedia managing system may receive sensor data from first electronic device when the multimedia content is being streamed in the first electronic device and may detect proximity of the user from the first electronic device based on sensor data. Further, the recording unit of the first electronic device may be automatically activated for recording the multimedia content currently being streamed, based on the proximity of the user. Furthermore, the multimedia managing system transmits the recorded multimedia content to second electronic device, upon detecting proximity of the user to the second electronic device for seamless streaming of the multimedia content.

## Description

### Technical Field

The present subject matter relates generally to a multimedia managing system, and more particularly, but not exclusively to a method and a system for seamless streaming of multimedia content for a user across plurality of electronic devices.

### Background

Set Top Box (STB) is one of the commonly used electronic devices for viewing multimedia content on display devices such as television. Generally, the STB converts a source signal into a form that can be displayed on the display devices. In a household scenario consisting of multiple rooms, a user may install STBs in the multiple rooms such that the multimedia content can be viewed on the display devices present in the multiple rooms. The user may view streamed multimedia content in any of the multiple rooms where the STB and the display device are configured. In a scenario where the user switches between the multiple rooms to view the multimedia content, the user may not switch off the STB in many instances, thereby resulting in unnecessary power loss. Also, longevity of the STB would be affected due to the improper maintenance of the STBs. Further, the STB configured in the room of user's choice may require manual activation and tuning by the user, for viewing the multimedia content in that room. Therefore, the user may miss a part of the multimedia content that is currently being streamed due to the time spent by the user in switching between multiple rooms, powering on the STB and selecting the channel that was previously being watched by the user. Thus, the user may not experience a seamless viewing of the multimedia content across the STBs configured in multiple rooms.

Currently, a few existing techniques detect proximity of the user to a reader associated with the display device based on signals received from wearable device of the user. Based on proximity, orientation of the wearable device with respect to the display device, user wearing the wearable device and the like, the reader may identify level of access to the display device available for the user. However, these existing techniques fail to provide a seamless multimedia content viewing experience to the users. In a few other existing techniques, the STB may be configured to detect presence of mobile phones of the one or more users within a predefined proximity. Based on the presence or absence of the mobile phones, the STB may shut down or be in a stand-by mode. However, considering presence or absence of mobile phones of the one or more users as a parameter to activate standby mode of the STB may not be an effective parameter in avoiding wastage of resources such as electricity.

### Summary

One or more shortcomings of the prior art may be overcome, and additional advantages may be provided through the present disclosure. Additional features and advantages may be realized through the techniques of the present disclosure. Other embodiments and aspects of the disclosure are described in detail herein and are considered a part of the claimed disclosure.

Disclosed herein is a method of seamless streaming of multimedia content for a user across a plurality of electronic devices. The method includes receiving, by a multimedia managing system, sensor data from first electronic device when the multimedia content is being streamed in the first electronic device. The multimedia managing system is associated with each of the plurality of electronic devices. Upon receiving the sensor data, the multimedia managing system detects proximity of the user from the first electronic device based on the sensor data. Further, the multimedia managing system activates a recording unit of the first electronic device for recording the multimedia content currently being streamed in the first electronic device, based on the proximity of the user from the first electronic device. Finally, the multimedia managing system transmits the recorded multimedia content to second electronic device, upon detecting proximity of the user to the second electronic device for seamless streaming of the multimedia content.

Further, the present disclosure includes a multimedia managing system for seamless streaming of multimedia content for a user across a plurality of electronic devices. The multimedia managing system includes a processor and a memory communicatively coupled to the processor. The memory stores the processor-executable instructions, which, on execution, causes the processor to receive sensor data from first electronic device when the multimedia content is being streamed in the first electronic device. The multimedia managing system is associated with each of the plurality of electronic devices. Upon receiving the sensor data, the processor detects proximity of the user from the first electronic device based on the sensor data. Further, the processor activates a recording unit of the first electronic device for recording the multimedia content currently being streamed in the first electronic device, based on the proximity of the user from the first electronic device. Finally, the processor transmits the recorded multimedia content to second electronic device, upon detecting proximity of the user to the second electronic device for seamless streaming of the multimedia content.

Furthermore, the present disclosure includes a non-transitory computer readable medium including instructions stored thereon that when processed by at least one processor causes a multimedia managing system to perform operations including receiving sensor data from a first electronic device when the multimedia content is being streamed on the first electronic device. The multimedia managing system is associated with the plurality of electronic devices. Upon receiving the sensor data, the instructions cause the processor to detect proximity of the user from the first electronic device based on the sensor data. Further, the instructions cause the processor to activate a recording unit of the first electronic device for recording the multimedia content currently being streamed in the first electronic device, based on the proximity of the user from the first electronic device. Finally, the instructions cause the processor to transmit the recorded multimedia content to second electronic device, upon detecting proximity of the user to the second electronic device for seamless streaming of the multimedia content.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG.1A** and **FIG.1B** show an exemplary architecture for seamless streaming of multimedia content for a user across a plurality of electronic devices in accordance with some embodiments of the present disclosure;
**FIG.2A** shows a detailed block diagram of a multimedia managing system for seamless streaming of multimedia content for a user across a plurality of electronic devices in accordance with some embodiments of the present disclosure;
**FIG.2B** and **FIG.2C** show an exemplary representation of an electronic device displaying notifications in accordance with some embodiments of the present disclosure;
**FIG.3** shows a flowchart illustrating a method of seamless streaming of multimedia content for a user across a plurality of electronic devices in accordance with some embodiments of the present disclosure; and
**FIG.4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration."

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The terms "streaming" and "broadcasting" may be alternatively used in the present disclosure.

Disclosed herein are a method and a system for seamless streaming of multimedia content for a user across a plurality of electronic devices. In some embodiments, the seamless streaming may be defined in the context of the present disclosure as maintaining continuity in providing multimedia access to the user between the plurality of electronic devices that may be individually configured in different rooms. In the present disclosure, a multimedia managing system may be activated when the user continuously accesses a multimedia content currently being streamed in first electronic device, for a first predefined time period. Upon activation, the multimedia managing system associated with each of the plurality of electronic devices, may receive a sensor data from first electronic device when the multimedia content is being streamed in the first electronic device. The sensor data may capture real-time movements of the user within a room in which the first electronic device may be configured. Based on the sensor data, the multimedia managing system may detect proximity of the user from the first electronic device. Further, the multimedia managing system may automatically activate a recording unit of the first electronic device for recording the multimedia content currently being streamed in the first electronic device, based on the detected proximity of the user. Therefore, the present disclosure ensures that the user need not manually select the recording option to record the multimedia content, thus avoiding situations such as user forgetting to activate the recording unit while leaving the room. Further, the multimedia managing system may receive the sensor data indicating position of the user in another room. Based on the sensor data, the multimedia managing system may detect proximity of the user from second electronic device present in another room. Based on the proximity of the user to the second electronic device, the multimedia managing system may transmit the recorded multimedia content to second electronic device.

Further, the multimedia managing system may display a notification related to the recorded multimedia content, to the user proximal to the second electronic device. The present disclosure may automatically power on the second electronic device to display the notification to the user in order to maintain seamless streaming of the multimedia content. If the user chooses to access the recorded multimedia content, the multimedia managing system may check for completion of an event that the user was accessing in the first electronic device. If the event is completed, then the multimedia managing system may directly play the recorded multimedia content to the user. If the event is not completed i.e. if the event is still being streamed, then the multimedia managing system may play the recorded multimedia content to the user. Simultaneously, the multimedia managing system may automatically tune the second electronic device to a certain channel where the event is being streamed and may record live multimedia content currently being provided to the second electronic device while the previously recorded multimedia content is being accessed by the user. If the user chooses to discard the recorded multimedia content, the multimedia managing system may store the recorded multimedia content in a multimedia database for a second predefined time period and subsequently discard the recorded multimedia content upon expiry of the second predefined time period. Further, when the user chooses to discard the recorded multimedia content, the multimedia managing system may display another notification indicating whether the user wants to continue to access the channel that the user was accessing in the first electronic device i.e. the channel in which the event is streamed. If the user chooses to access the channel in which the event is streamed, the multimedia managing system may automatically tune the second electronic device to that channel. If the user chooses not to access the channel in which the event is streamed, then the multimedia managing system may retain a channel based on predefined settings such as a default channel, a channel that was last accessed when the second electronic device was powered on, frequently accessed channel by the user and the like.

The present disclosure provides a feature wherein, the plurality of electronic devices may be put to a stand-by mode based on proximity of the user to the plurality of electronic devices. Therefore, the present disclosure avoids unnecessary wastage of resources such as electricity when the user is not accessing the multimedia content.

A description of an embodiment with several components in communication with each other does not imply that all such components are required. On the contrary a variety of optional components are described to illustrate the wide variety of possible embodiments of the invention.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

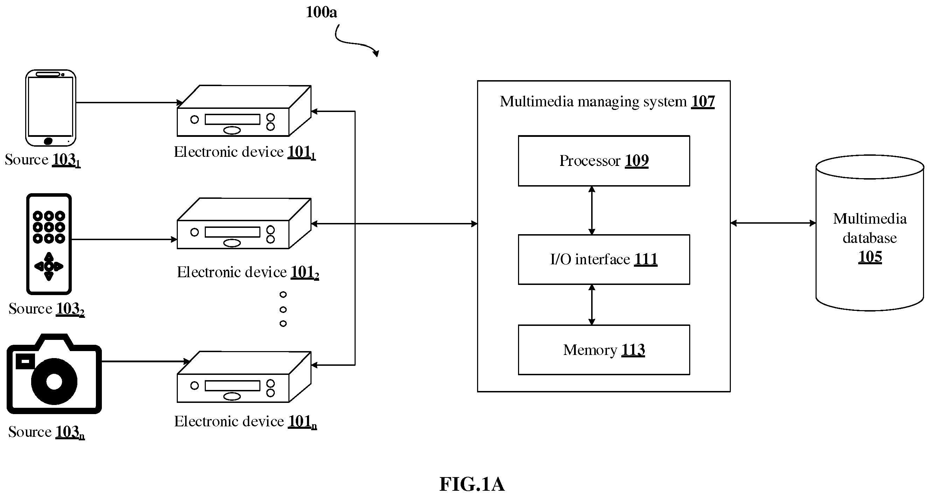

**FIG.1A** show an exemplary architecture for seamless streaming of multimedia content for a user across a plurality of electronic devices in accordance with some embodiments of the present disclosure.

The architecture **100a** includes an electronic device **101₁** to an electronic device **101ₙ** (collectively referred as plurality of electronic devices **101),** a source **103₁** to a source **103ₙ** (collectively referred as one or more sources **103),** a multimedia database **105** and a multimedia managing system **107.** As an example, the plurality of electronic devices **101,** may include, but not limited to, a Set Top Box (STB) and a Digital Video Recorder (DVR). Further below, the present disclosure is explained in view of the STB as an example. However, this should not be considered as a limitation of the present disclosure. Furthermore, in the present disclosure, each of the plurality of electronic devices **101** may be individually present in multiple rooms of a closed space. As an example, the closed space may be a house, an apartment, a building and the like.

In some embodiments, each of the plurality of electronic devices **101** are associated with one or more sources **103** externally. As an example, the one or more sources **103** may include, but not limited to, one or more sensors such as proximity sensors, an image capturing device such as a camera, a mobile, a tablet and the like. As an example, the one or more sensors such as the proximity sensor may be configured in a remote controller used to operate the plurality of electronic devices **101.** As an example, the image capturing devices such as the camera may be associated with the plurality of electronic devices **101.** The one or more sources **103** may communicate with the plurality of electronic devices **101** through a communication network (not shown in the **FIG.1A****).** The communication network may include a wired communication network or a wireless communication network. In some embodiments, the one or more sources **103** may be integrated within each of the plurality of electronic devices **101.**

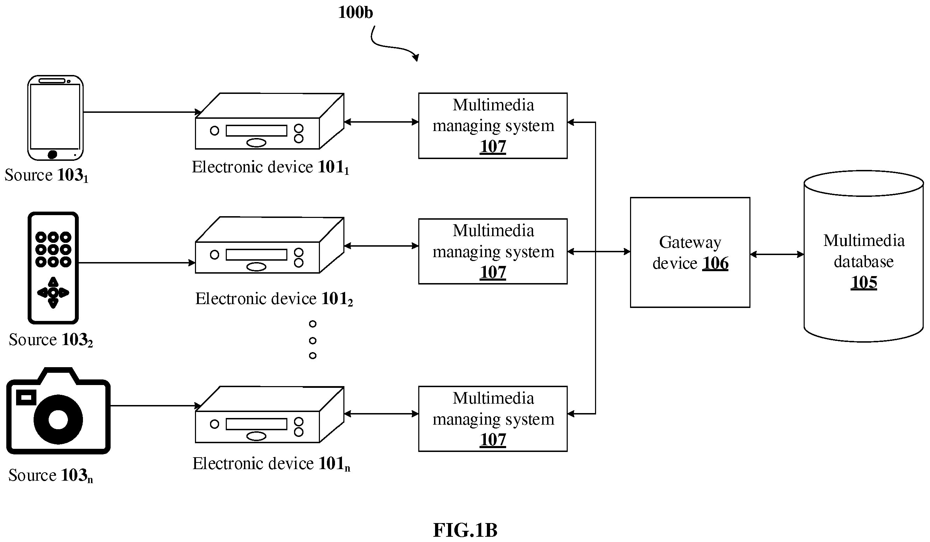

In some embodiments, each of the plurality of electronic devices **101** may be externally associated with the multimedia managing system **107** as shown in the **FIG.1A** via the communication network. In some embodiments, each of the plurality of electronic devices **101** may include the multimedia managing system **107** individually, as shown in architecture **100b** of the **FIG.1B****.** In some embodiments, each of the plurality of electronic devices **101** shown in the **FIG.1B** may be interlinked via a gateway device **106** as shown in the **FIG.1B** using the communication network.

Further, the multimedia managing system **107** may be externally associated with the multimedia database **105** as shown in the **FIG.1A****.** In some embodiments, the multimedia database **105** may be present within the multimedia managing system **107.**

The multimedia managing system **107** includes a processor **109,** an Input/Output (I/O) interface **111** and a memory **113.** The I/O interface **111** may be configured to receive a sensor data from a first electronic device when a multimedia content is being streamed in the first electronic device. In the context of the present disclosure, the first electronic device may be defined as one of the plurality of electronic devices **101.** As an example, the sensor data may include, but not limited to, a position information and one or more images of a user. The multimedia content may be a combination of different content forms such as text, audio, images, animations, video, interactive content and the like.

In some embodiments, the first electronic device may receive the sensor data from the one or more sources **103** and transmit the sensor data to the multimedia managing system **107.** In an alternative embodiment, the one or more sources **103** may directly transmit the sensor data to the multimedia managing system **107.** The sensor data may be stored in the memory **113.** The memory **113** is communicatively coupled to the processor **109.** The processor **109** may detect proximity of the user from the first electronic device. Upon detecting the proximity of the user, the processor **109** may activate a recording unit of the first electronic device for recording the multimedia content currently being streamed in the first electronic device, based on the proximity of the user from the first electronic device. In some embodiments, the processor **109** may retrieve the recorded multimedia content from the first electronic device and store the recorded multimedia content in the multimedia database **105.** Further, the processor **109** may transmit the recorded multimedia content to second electronic device, upon detecting proximity of the user to the second electronic device for seamless streaming of the multimedia content. In the context of the present disclosure, the second electronic device may be defined as one of rest of the plurality of electronic devices **101.** In some embodiments, the rest of the plurality of electronic devices **101** are the electronic devices that may be configured individually in different rooms, other than, the first electronic device in which, the multimedia content is currently being streamed and accessed by the user.

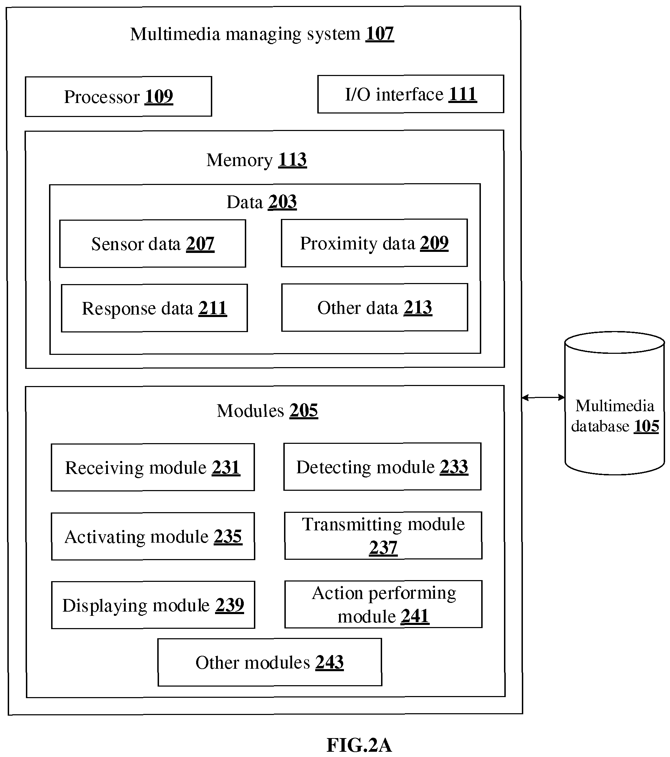

**FIG.2A** shows a detailed block diagram of a multimedia managing system for seamless streaming of multimedia content for a user across plurality of electronic devices in accordance with some embodiments of the present disclosure.

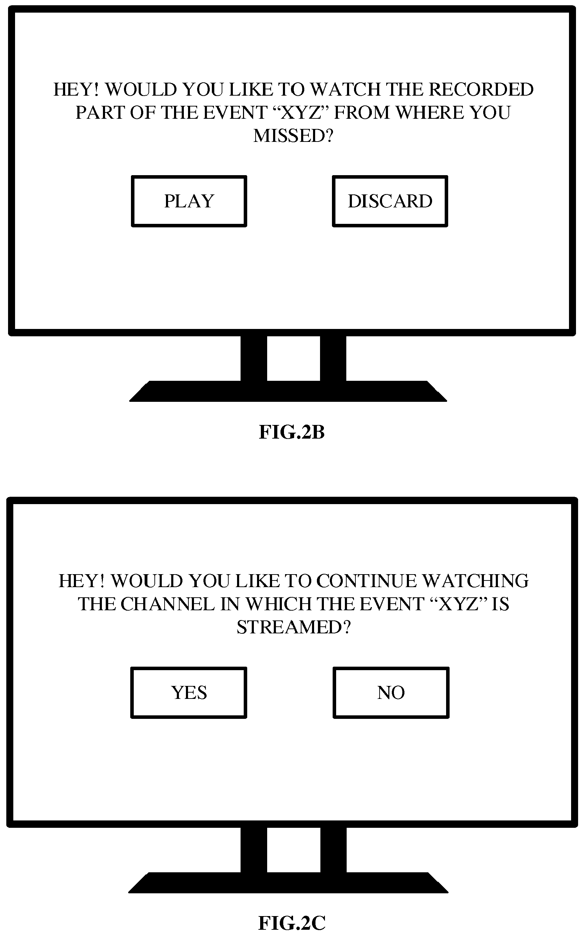

In some implementations, the multimedia managing system **107** may include data **203** and modules **205.** As an example, the data **203** is stored in the memory **113** configured in the multimedia managing system **107** as shown in the **FIG.2****.** In one embodiment, the data **203** may include a sensor data **207,** a proximity data **209,** a response data **211** and other data **213.** In the illustrated **FIG.2A****,** modules **205** are described herein in detail.

In some embodiments, the data **203** may be stored in the memory **113** in form of various data structures. Additionally, the data **203** can be organized using data models, such as relational or hierarchical data models. The other data **213** may store data, including temporary data and temporary files, generated by the modules **205** for performing the various functions of the multimedia managing system **107.**

In some embodiments, the data **203** stored in the memory **113** may be processed by the modules **205** of the multimedia managing system **107.** The modules **205** may be stored within the memory **113.** In an example, the modules **205** communicatively coupled to the processor **109** configured in the multimedia managing system **107,** may also be present outside the memory **113** as shown in **FIG.2** and implemented as hardware. As used herein, the term modules refer to an application specific integrated circuit (ASIC), an electronic circuit, a processor (shared, dedicated, or group) and memory that execute one or more software or firmware programs, a combinational logic circuit, and/or other suitable components that provide the described functionality.

In some embodiments, the modules **205** may include, for example, a receiving module **231,** a detecting module **233,** an activating module **235,** a transmitting module **237,** a displaying module **239,** an action performing module **241** and other modules **243.** The other modules **243** may be used to perform various miscellaneous functionalities of the multimedia managing system **107.** It will be appreciated that such aforementioned modules **205** may be represented as a single module or a combination of different modules.

In some embodiments, the receiving module **231** may receive sensor data **207** from first electronic device when a multimedia content is being streamed in the first electronic device. As an example, the sensor data **207** may include, but not limited to, a position information and one or more images of a user. As an example, the position information may indicate position of the user from the plurality of electronic devices **101** in terms of distance. The sensor data **207** may capture real-time movements of the user within a room in which the first electronic device may be configured. In some embodiments, the receiving module **231** may receive the sensor data **207** upon activation of the multimedia managing system **107.** In some embodiments, the multimedia managing system **107** may be activated when a user accesses the multimedia content on the first electronic device for a first predefined time period. As an example, consider the first predefined time period is 5 minutes. When the user accesses the multimedia content on the first electronic device continuously for 5 minutes, the multimedia managing system **107** may be activated. The first electronic device may receive the sensor data **207** from one or more sources **103** associated with each of the one or more electronic devices **101.** As an example, the one or more sources **103** may include, but not limited to, one or more sensors such as proximity sensors and, an image capturing device such as a camera, a mobile, a tablet and the like. As an example, the one or more sensors such as the proximity sensor may be configured in a remote controller used to operate the one or more electronic devices **101.** As an example, the image capturing devices such as the camera may be associated with the one or more electronic devices **101** or integrated in one or more electronic devices **101.**

In some embodiments, the detecting module **233** may detect proximity of the user from the first electronic device based on the sensor data **207.** In some embodiments, the proximity of the user from the first electronic device may be defined in terms of a first predefined distance and a second predefined distance, corresponding to the first electronic device. As an example, the proximity of the user from the first electronic device may be within or equal to the first predefined distance. As an example, consider that the first electronic device is configured in room 1. Therefore, when the proximity of the user is detected to be "within or equal to the first predefined distance", the user may be present within the room 1 and close to the first electronic device. As an example, the proximity of the user from the first electronic device may be beyond the first predefined distance, but, within the second predefined distance. As an example, considering the above-mentioned example of room 1, when the proximity of the user is detected to be "beyond the first predefined distance, but, within the second predefined distance", the user may be present within the room 1 but at a certain distance within a multimedia content accessible range from the first electronic device. As an example, the proximity of the user from the first electronic device may be beyond the second predefined distance. As an example, considering the above-mentioned example of room 1, when the proximity of the user is detected to be "beyond the second predefined distance", the user may be outside the room 1 which is beyond the multimedia content accessible range from the first electronic device. The proximity of the user detected based on the sensor data **207** at any given point of time may be stored as the proximity data **209.** Further, the first predefined distance and the second predefined distance may be different for the one or more electronic devices **101.** In some embodiments, the first predefined distance and the second predefined distance may be defined based on size of rooms in which the one or more electronic devices **101** may be configured.

In some embodiments, the activating module **235** may activate a recording unit of the first electronic device based on the proximity of the user from the first electronic device. In some embodiments, when the proximity of the user is between the first predefined distance and the second predefined distance corresponding to the first electronic device, the activating module **235** may activate the recording unit of the first electronic device to record the multimedia content currently being streamed. In some embodiments, the recording unit may record the multimedia content currently being streamed until completion of an event currently accessed by the user in the multimedia content. In some other embodiments, the recording unit may record the multimedia content currently being streamed until inactivation of the first electronic device. The processor **109** may retrieve the recorded multimedia content and a metadata associated with the recorded multimedia content from the first electronic device. As an example, the metadata associated with the recorded multimedia content may include, but not limited to, channel currently accessed by the user, the event currently accessed by the user, start time of the event and end time of the event. Upon retrieving, the processor **109** may store the recorded multimedia content in a multimedia database **105** associated with the multimedia managing system **107.**

In some embodiments, when the proximity of the user is beyond a second predefined distance corresponding to the first electronic device, the activating module **235** may activate the recording unit of the first electronic device. Upon activating the recording unit, the recording unit may record the multimedia content currently being streamed and simultaneously the activating module **235** may put the first electronic device to a stand-by mode. In some embodiments, the user may preconfigure the activating module **235** in such a way that the first electronic device may not be put to the stand-by mode when the proximity of the user may be beyond the second predefined distance corresponding to the first electronic device.

Consider a scenario when the user is beyond the second predefined distance corresponding to the first electronic device. However, there may exist plurality of users who may be accessing the multimedia content currently being streamed in the first electronic device within the first predefined distance corresponding to the first electronic device. In such scenarios, the activating module **235** may activate the recording unit of the first electronic device. Upon activating the recording unit, the recording unit may record the multimedia content currently being streamed without putting the first electronic device to a stand-by mode, due to the presence of the plurality of users. In some embodiments, the multimedia managing system **107** may recognize the user, among the plurality of users, who moves beyond the first predefined distance or the second predefined distance corresponding to the first electronic device, as a reference user. The multimedia managing system **107** may recognize the reference user using one or more predefined image processing techniques. In some other embodiments, the multimedia managing system **107** may be preconfigured to monitor a specific user. In some embodiments, an image of the reference user or the specific user may be stored in the memory **113.**

In some embodiments, the receiving module **231** may receive sensor data **207** from second electronic device when the user is proximal to the second electronic device. Based on the sensor data **207,** the detecting module **233** may detect whether the user proximal to the second electronic device is the reference user, based on the one or more predefined image processing techniques. In some embodiments, the one or more predefined image processing techniques may compare a current image of the user retrieved from the sensor data **207** with the image of the reference user or the specific user previously stored in the memory **113.** Upon recognizing the user as the reference user, the detecting module **233** may trigger the transmitting module **237** and the displaying module **239** to perform the functionalities as described below.

In some embodiments, the transmitting module **237** may transmit the recorded multimedia content to the second electronic device based on proximity of the user to the second electronic device. Further, the transmitting module **237** may trigger the activating module **235** to activate or power-on the second electronic device when the proximity of the user is between a first predefined distance and a second predefined distance corresponding to the second electronic device. Further, upon activating the second electronic device, the transmitting module **237** may transmit the recorded multimedia content to the second electronic device when the proximity of the user is between the first predefined distance and the second predefined distance corresponding to the second electronic device.

In some embodiments, the displaying module **239** may display a notification related to the recorded multimedia content on the second electronic device. In some embodiments, the notification may be displayed to the user when the proximity of the user is equal to or within the first predefined distance corresponding to the second electronic device. In some embodiments, the notification may indicate options to the user to either play or discard the recorded multimedia content as shown in the **FIG.2B****.**

In some embodiments, the action performing module **241** may perform at least one of playing or discarding the recorded multimedia content based on response of the user to the notification. The response of the user to the notification may be stored as the response data **211.** In some embodiments, when the response received for the notification by the action performing module **241** is to "play" the recorded multimedia content, the action performing module **241** may play the recorded multimedia content on the second electronic device. Initially, the action performing module **241** may check for completion of an event that the user was accessing in the first electronic device. If the event is completed, then the action performing module **241** may directly play the recorded multimedia content to the user. In some embodiments, if the event is not completed i.e. if the event is still being streamed, then the action performing module **241** may play the recorded multimedia content to the user. Simultaneously, the action performing module **241** second electronic device may automatically tune into a certain channel that was accessed by the user in the first electronic device to enable recording live multimedia content currently being provided to the second electronic device. Further, the action performing module **241** may trigger the activating module **235** to activate a recording unit of the second electronic device to record the live multimedia content currently being provided to the second electronic device, parallelly, as the recorded multimedia content is played. Therefore, using the method explained above, the action performing module **241** may seamlessly stream the multimedia content for the user across the plurality of electronic devices **101.** In some embodiments, when the response received for the notification by the action performing module **241** is to discard the recorded multimedia content, the action performing module **241** may store the recorded multimedia content and the metadata associated with the recorded multimedia content in the multimedia database **105** for a second predefined time period and subsequently discard the recorded multimedia content upon expiry of the second predefined time period. As an example, if the second predefined time period is 30minutes, the action performing module **241** may discard the recorded multimedia content after the expiry of 30minutes. Further, when the response received for the notification by the action performing module **241** is to discard the recorded multimedia content, the action performing module **241** may display another notification (also referred as second notification) as shown in the **FIG. 2C****,** indicating whether the user wants to continue to access the channel that the user was accessing in the first electronic device i.e. the channel in which the event is streamed. If the response received for the second notification is to access the channel in which the event is streamed, the action performing module **241** may automatically tune the second electronic device to that channel. In some embodiments, if the response received for the second notification is not to access the channel in which the event is streamed, then the action performing module **241** may retain a channel based on predefined settings such as a default channel, a channel that was last accessed when the second electronic device was powered on, frequently accessed channel by the user and the like.

Henceforth, the process for seamless streaming of multimedia content for a user across plurality of electronic devices is explained with the help of one or more examples for better understanding of the present disclosure. However, the one or more examples should not be considered as limitation of the present disclosure.

**Prerequisites:** Consider an exemplary scenario where a house contains 3 rooms "Room 1", "Room 2" and "Room 3". Each room is configured with an electronic device **101.** In this scenario, each electronic device **101** is a Set Top Box (STB). Therefore, each room "Room 1", "Room 2" and "Room 3" are configured with STB 1, STB 2 and STB 3 respectively. Further, consider that the one or more sources for providing sensor data **207** are a proximity sensor and a camera. The proximity sensor may be configured in a remote controller used to operate the STBs or a mobile phone of the user. A camera may be fixated on each STB configured in the house for capturing images or videos of the users present in the room. Further, exemplary first predefined distance and the second predefined distance corresponding to STB 1, STB 2 and STB 3 are as indicated in the below **Table 1.**

**Table 1**

| **Room number - STB number** | **First predefined distance from STB** | **Second predefined distance from STB** |
|---|---|---|
| Room 1 - STB 1 | 4 meters | 6.5 meters |
| Room 2 - STB 2 | 3 meters | 5 meters |
| Room 3 - STB 3 | 5 meters | 7 meters |

In some embodiments, the first predefined distance and the second predefined distance corresponding to each room may vary based on size of the respective rooms. In some other embodiments, the first predefined distance and the second predefined distance corresponding to each room may be same for each room.

Consider the first predefined time period for activating the STBs is 5 minutes and the second predefined time period for discarding the recorded multimedia content from the multimedia database **105** is 30 minutes.

**Method:** Consider the user has been viewing an event "XYZ" currently being streamed in channel 10, for the last 8 minutes in room 1. Since, the user has viewed the event continuously for more than the first predefined time period which is 5 minutes, the multimedia managing system **107** may be activated. Upon activation, the proximity sensor and the camera associated with the STB 1 may start capturing the sensor data **207** and provide the sensor data **207** to the STB1. In some embodiments, any number of sensors and other sources may be used to capture the sensor data **207.** Based on the sensor data **207,** the multimedia managing system **107** may detect proximity of the user from the STB1. Consider the user starts moving out of the room. When the user is within the first predefined distance "4 meters" (refer **Table 1)** from the STB1, the multimedia managing system **107** may not take any action. When the user is beyond the first predefined distance "4 meters" from the STB 1, but within the second predefined distance "6.5 meters" (refer to **Table** 1) from the STB 1, the multimedia managing system **107** may activate a recording unit of the STB 1 to record the multimedia content related to the event that the user was watching. The STB1 may record the multimedia content until the end of the event currently being streamed or until inactivation of the STB 1. When the user is beyond the second predefined distance "6.5 meters" from the STB 1, the multimedia managing system **107** may simultaneously record the multimedia content and put the STB 1 in stand-by mode. Upon recording the multimedia content, the recorded multimedia content and the metadata associated with the recorded multimedia content may be stored by the multimedia managing system **107** in the multimedia database **105.** Consider a scenario when the user is beyond the second predefined distance "6.5 metres" from STB 1. However, there may exist plurality of users within the first predefined distance "4 meters" from the STB 1, who may be viewing the event XYZ in the room 1. In such scenarios, the multimedia managing system **107** may activate the recording unit of the STB 1 to record the multimedia content currently being streamed, without putting the STB 1 in the stand-by mode, due to the presence of the plurality of users.

Upon moving out of the room 1, consider the user entered into room 3. The one or more sources associated with the STB 3, may capture the sensor data **207** and provide the sensor data **207** to the STB 3. Based on the sensor data **207** corresponding to STB 3, the multimedia managing system **107** may detect proximity of the user from the STB 3. When the user is between the first predefined distance "3 meters" (refer **Table 1)** and the second predefined distance "5 meters" (refer **Table 1),** from the STB 3, the multimedia managing system **107** initially activate or power on the STB 3. Upon powering on the STB 3, the multimedia managing system **107** may transmit the recorded multimedia content and the metadata associated with the recorded multimedia content to the STB 3. When the user is at a distance equal to or less than the first predefined distance "3 meters" from the STB 3, the multimedia managing system **107** may display a notification to the user. As an example, the notification may be as shown below:
Hey User! Would you like to watch the recorded part of the Event "XYZ" from where you missed?

In some embodiments, the notification may be customized for the user based on the metadata of the recorded multimedia content.

The user may respond to the notification in terms of "Yes, play the recorded multimedia content" or "No, discard the recorded multimedia content". Based on the response of the user to the notification, the multimedia managing system **107** would either play or discard the recorded multimedia content. If the user responds as "Play the recorded multimedia content", the multimedia managing system **107** may check for completion of an event that the user was accessing in the STB 1. Consider that the event is not completed i.e. the event is still being streamed in channel 10. In such a scenario, the multimedia managing system **107** may play the recorded multimedia content to the user through the STB 3. Simultaneously, the multimedia managing system **107** may automatically tune the STB 3 to channel 10 using the metadata to enable recording live multimedia content currently being streamed in channel 10 through recording unit of the STB 3. Therefore, as the recorded multimedia content is played, parallelly, the multimedia managing system **107** may record live multimedia content currently being streamed in channel 10. If the user responds as "discard the multimedia content", the multimedia managing system **107** may store the recorded multimedia content in the multimedia database **105** for the second predefined time period "30minutes" (refer **Table 1)** and discard the recorded multimedia content upon the expiry of 30 minutes. Further, the multimedia managing system **107** may display a second notification to the user. As an example, the second notification may be as shown below:
Hey user! Would you like to continue watching channel 10 in which the Event "XYZ" is streamed?

The user may respond to the notification in terms of "Yes" or "No". If the user responds as "Yes", then the multimedia managing system **107** may tune the STB 3 to channel 10. If the user responds as "No", then the multimedia managing system **107** may tune the STB 3 to channel X, which was a last watched channel when the STB 3 was powered on previously.

The process as explained above may repeat for each room and each STB configured in the respective room based on the proximity of the user.

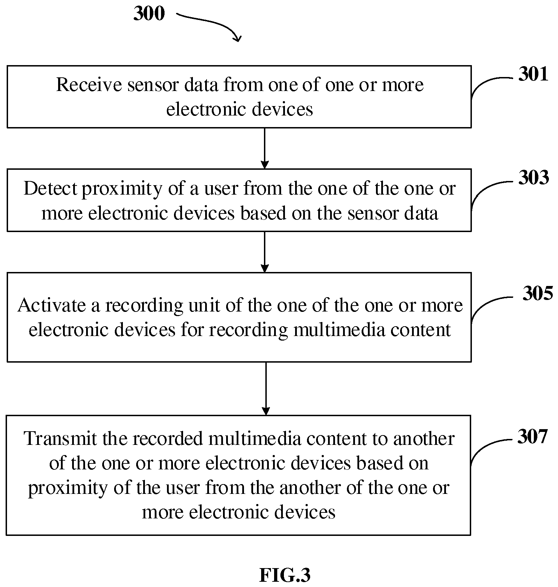

**FIG.3** shows a flowchart illustrating a method of seamless streaming of multimedia content for a user across plurality of electronic devices in accordance with some embodiments of the present disclosure.

As illustrated in **FIG.3****,** the method **300** includes one or more blocks illustrating a method of seamless streaming of multimedia content for a user across plurality of electronic devices **101.** The method **300** may be described in the general context of computer executable instructions. Generally, computer executable instructions can include routines, programs, objects, components, data structures, procedures, modules, and functions, which perform functions or implement abstract data types.

The order in which the method **300** is described is not intended to be construed as a limitation, and any number of the described method blocks can be combined in any order to implement the method **300.** Additionally, individual blocks may be deleted from the methods without departing from the scope of the subject matter described herein. Furthermore, the method **300** can be implemented in any suitable hardware, software, firmware, or combination thereof.

At **block 301,** the method **300** may include receiving, by a processor **109** of the multimedia managing system **107,** sensor data **207** from first electronic device when the multimedia content is being streamed in the first electronic device. In some embodiments, the multimedia managing system **107** may be associated with each of the plurality of electronic devices **101.** As an example, the sensor data **207** may include, but not limited to, a position information and one or more images of the user. As an example, the position information may indicate position of the user from the plurality of electronic devices **101** in terms of distance. The sensor data **207** may capture real-time movements of the user within a room in which the first electronic device may be configured.

At **block 303,** the method **300** may include detecting, by the processor **109,** proximity of the user from the first electronic device based on the sensor data **207.** In some embodiments, the proximity of the user from the first electronic device may be defined in terms of a first predefined distance and a second predefined distance, corresponding to the first electronic device.

At **block 305,** the method **300** may include, activating, by the processor **109,** a recording unit of the first electronic device for recording the multimedia content currently being streamed in the first electronic device, based on the proximity of the user from the first electronic device.

At **block 307,** the method **300** may include, transmitting, by the processor **109,** the recorded multimedia content to second electronic device, upon detecting proximity of the user to the second electronic device. The processor **109** may further display a notification related to the recorded multimedia content on the second electronic device. Based on response of the user to the notification, the processor **109** may enable playing or discarding the recorded multimedia content, thereby ensuring seamless streaming of the multimedia content across the plurality of electronic devices **101.**

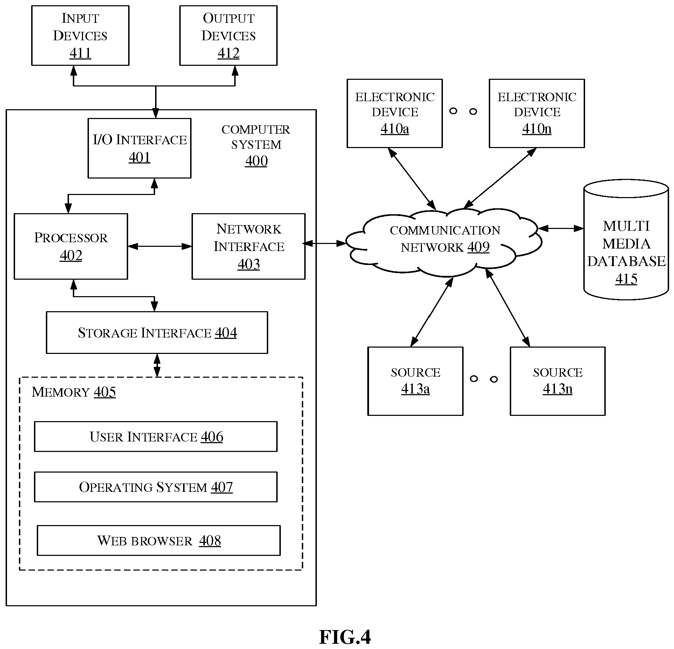

**FIG.4** is a block diagram of an exemplary computer system for implementing embodiments consistent with the present disclosure.

In some embodiments, **FIG.4** illustrates a block diagram of an exemplary computer system **400** for implementing embodiments consistent with the present invention. In some embodiments, the computer system **400** can be multimedia managing system **107** that is used for seamless streaming of multimedia content for a user across plurality of electronic devices **101.** The computer system **400** may include a central processing unit ("CPU" or "processor") **402.** The processor **402** may include at least one data processor for executing program components for executing user or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with input devices **411** and output devices **412** via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** computer system **400** may communicate with input devices **411** and output devices **412.**

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the computer system **400** may communicate with plurality of electronic devices **410** (**410ₐ** up to **410ₙ**), one or more sources **413** (**413ₐ** up to **413ₙ**) and a multimedia database **415.** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more electronic devices **410** may include, but not limited to, a Set Top Box (STB) and a Digital Video Recorder (DVR). As an example, the one or more sources **103** may include, but not limited to, one or more sensors such as proximity sensors and, an image capturing device such as a camera, a mobile, a tablet and the like. In some embodiments, the processor **402** may be disposed in communication with a memory **405** (e.g., RAM, ROM, etc. not shown in **FIG.4****)** via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, a user interface **406,** an operating system **407,** a web browser **408** etc. In some embodiments, the computer system **400** may store user/application data, such as the data, variables, records, etc. as described in this invention. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vista/7/8, etc.), Apple iOS, Google Android, Blackberry Operating System (OS), or the like. The User interface **406** may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system **400** may implement the web browser **408** stored program components. The web browser **408** may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

### Advantages of the embodiment of the present disclosure are illustrated herein.

The present disclosure provides a method and a system for seamless streaming of multimedia content for a user across plurality of electronic devices.

The present disclosure provides a feature wherein the multimedia content is automatically recorded based on the proximity of the user to the plurality of electronic devices.

The present disclosure provides a feature wherein the user can view portions of the multimedia content that was missed by the user without the need for manually activating the recording unit, powering on the electronic device and tuning the electronic device to display the previously watched channel.

The present disclosure provides a feature wherein, the plurality of electronic devices will be put to a stand-by mode based on proximity of the user to the plurality of electronic devices.

A description of an embodiment with several components in communication with each other does not imply that all such components are required. On the contrary a variety of optional components are described to illustrate the wide variety of possible embodiments of the invention.

When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for seamless streaming of multimedia content for a user across plurality of electronic devices. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

The embodiments of the present invention are intended to be illustrative, but not limiting, of the scope of the invention.

## Claims

1. A method for seamless streaming of multimedia content for a user across a plurality of electronic devices (101), the method comprising:
receiving, by a multimedia managing system (107), sensor data (207) from a first electronic device when the multimedia content is being streamed on the first electronic device, wherein the multimedia managing system (107) is associated with the plurality of electronic devices (101);
detecting, by a multimedia managing system (107), proximity of the user to the first electronic device based on the sensor data (207);
activating, by the multimedia managing system (107), a recording unit of the first electronic device for recording the multimedia content currently being streamed on the first electronic device, based on the proximity of the user from the first electronic device; and
transmitting, by the multimedia managing system (107), the recorded multimedia content to a second electronic device, upon detecting proximity of the user to the second electronic device for seamless streaming of the multimedia content.

2. The method as claimed in claim 1, wherein the multimedia managing system (107) is activated when the user accesses the multimedia content on the first electronic device for a first predefined time period.

3. The method as claimed in claim 1 or 2, wherein the sensor data (207) comprises at least one of a position information and one or more images of the user.

4. The method as claimed in claim 1, 2, or 3, further comprises displaying, by the multimedia managing system (107), a notification related to the recorded multimedia content on the second electronic device.

5. The method as claimed in claim 4, wherein the notification is displayed to the user when proximity of the user is equal to or within a first predefined distance corresponding to the second electronic device.

6. The method as claimed in any preceding claim, further comprising activating a recording unit of the second electronic device to record the multimedia content currently being provided to the second electronic device, while playing the recorded multimedia content.

7. The method as claimed in any preceding claim, wherein the multimedia content currently being streamed is recorded when the proximity of the user is between a first predefined distance and a second predefined distance corresponding to the first electronic device.

8. The method as claimed in any preceding claim, further comprising putting the first electronic device into a stand-by mode when the proximity of the user is beyond a second predefined distance from the first electronic device.

9. The method as claimed in any preceding claim, wherein the multimedia content currently being streamed is recorded until one of completion of an event currently accessed by the user in the multimedia content or inactivation of the first electronic device.

10. The method as claimed in any preceding claim, wherein the recorded multimedia content is transmitted to the second electronic device when the proximity of the user is between a first predefined distance and a second predefined distance corresponding to the second electronic device.

11. The method as claimed in any preceding claim 1, wherein the second electronic device is activated when the proximity of the user is between a first predefined distance and a second predefined distance from the second electronic device.

12. A multimedia managing system (107) for seamless streaming of multimedia content for a user across plurality of electronic devices (101), the multimedia managing system (107) comprising:
a processor (109); and
a memory (113) communicatively coupled to the processor (109), wherein the memory (113) stores the processor (109)-executable instructions, which, on execution, causes the processor (109) to perform the method of any preceding claim.

13. A non-transitory computer readable medium including instructions stored thereon that when processed by at least one processor (109) causes a multimedia managing system (107) to perform operations comprising the method of any of claims 1 - 11
